# EUROPEAN PATENT APPLICATION

(11) **EP 4 531 143 A1**
(43) Date of publication of application: **02.04.2025**
(21) Application number: 23200705.4
(22) Date of filing: 29.09.2023
(51) Int. Cl.: H01M 4/66, H01M 10/04, H01M 10/0585, H01M 50/526, H01M 10/052, H01M 50/105

(54) **BATTERY CELL, METHOD FOR MANUFACTURING A BATTERY CELL, AND A DEVICE FOR MANUFACTURING A BATTERY CELL**

(71) Applicant: CUSTOMCELLS Holding GmbH, 25524 Itzehoe (DE)
(72) Inventor: Kaiser, Bernd, 25524 Itzehoe (DE); Beier, Maximilian, 25524 Itzehoe (DE)
(74) Representative: LKGLOBAL Lorenz & Kopf Patentanwalt Attorney at Law PartG mbB

(57) **Abstract**

A first aspect of this disclosure is related to a battery cell, comprising:
- one or more anodes and one or more cathodes stacked upon each other yielding a stacked configuration;

wherein at least one of the anodes and/or the cathodes comprises a tap that exceeds the stacked configuration; and
wherein a tap comprises an isolation layer.

## Description

### Technical Field

This disclosure relates to battery cells with one or more taps that comprise an isolation layer. Furthermore, manufacturing methods are disclosed as well as coating devices for providing electrodes with an isolation layer.

### Background

A battery with an electrode stack refers to a type of electrochemical energy storage device where multiple layers of electrodes are stacked together to create an energy storage unit. Batteries with electrode stacks can be used in various applications, including portable electronics, electric vehicles, and renewable energy systems. A battery comprises two electrode types - an anode (negative electrode) and a cathode (positive electrode). These electrodes are typically made of materials that can reversibly store and release electrical energy through chemical reactions. An electrolyte is used to facilitate the movement of ions between the anode and cathode. In a battery with an electrode stack, multiple layers of anodes and cathodes can be stacked on top of each other. Between an anode and a cathode a separator acts as a physical barrier to prevent electrical contact between the positive and negative electrodes, while still allowing the flow of ions necessary for the battery's electrochemical reactions. The electrodes can be connected to an external circuit through current collectors. The current collectors are also called "taps". Internal experiments have shown that in battery cells with a stacked configuration, there is a risk that a tap can get in contact with another electrode or another tap. This can lead to shortcuts. Improvements are therefore desirable.

### Summary

An object of the present disclosure is improvement of electrical and/or mechanical safety of a battery cell.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of this disclosure is related to a battery cell, comprising:
- one or more anodes and one or more cathodes stacked upon each other yielding a stacked configuration;
   wherein at least one of the anodes and/or the cathodes comprises a tap that exceeds the stacked configuration; and
   wherein a tap comprises an isolation layer.

A battery cell can have one of different forms. In particular, a battery cell can be a cylindrical cell, a prismatic cell or a pouch cell. A cylindrical cell can have a tubular or cylindrical shape. A prismatic cell can have a flat, rectangular shape. A pouch cell can have a flexible, flat, and pouch-like structure. Additionally or alternatively, a battery cell can have a more complex form that is a consequence from the intended use. For example, a large-format cell can be used in applications requiring high energy density and capacity, such as electric vehicles, grid energy storage, and industrial equipment. Therefore, battery cells come in various shapes and sizes. Custom battery packs can be configured in various ways to create custom battery packs tailored to specific applications. These packs may consist of multiple individual cells connected in series or parallel and enclosed in a custom housing.

A stacked configuration in a battery cell typically refers to a design where multiple layers of electrode material are stacked on top of each other within the cell. This stacking of electrode layers can increase the overall capacity and energy density of the battery while maintaining a small cell size under a given form factor. In one configuration, multiple layers of anode material are stacked within the cell. Each anode layer contributes to the capacity of the cell. This design is commonly used in lithium-ion batteries, where stacked anode materials (typically graphite or other carbon-based materials) allow for higher energy storage capacity. Similarly, multiple layers of cathode material can be stacked within the cell. Each cathode layer adds to the capacity of the cell. Stacked cathodes are often used in lithium-ion batteries as well. In other configurations, battery cells use alternating layers of anode and cathode materials to create a stacked configuration. This design can increase both capacity and energy density, providing a balance between anode and cathode contributions. In other configurations, such as solid-state batteries, layers of anode, cathode, and electrolyte materials are stacked together.

A tap (also "current collector") that exceeds the stacked configuration can be a part of an electrode and/or a part connected to an electrode that exceeds the electrode stack and that is electrically conductive. A tap can be configured to obtain energy from the battery cell, charge the battery cell and/or for diagnostic purposes. For lithium-ion batteries, various current collectors can be used such as Al, Cu, Ni, Ti, and/or stainless steel. Al can be used for a cathode current collector. Cu can be used as an anode current collector. Al and Cu current collectors can further be categorized into foil, meshed, foam and carbon coated type current collectors. All possible kinds of taps are addressed by this disclosure.

An isolation layer can be a layer that is arranged at least partly on the tap. The isolation layer provides electrical isolation in case the tap of the isolation layer gets in contact with another electrode and/or a tap from another electrode thereby generating an electrical shortcut which in turn could lead to a thermal runaway. These kinds of shortcuts can in particular be problematic in stacked configurations where an anode and a cathode are electrically isolated only by a thin separator.

An embodiment of the first aspect is related to a battery cell,
comprising more than one tap with an isolation layer.

The battery cell can comprise taps from one or more anodes wherein each tap comprises an isolation layer. Additionally or alternatively, the battery cell can comprise taps from one or more cathodes wherein each tap comprises an isolation layer. In particular all taps of a battery cell can comprise an isolation layer. This facilitates battery design with standardized components. Alternatively, a battery can comprise different taps each comprising an isolation layer that is configured, e.g., arranged on the tap, differently. This can support a tailored electrical design of a battery cell.

An embodiment of the first aspect is related to a battery cell,
wherein the isolation layer of one or more taps is arranged on a top side of the respective tap and/or on a bottom side of the respective tap.

Top side and bottom side are defined relative to the electrode stack. The top side and/or the bottom side can be at least partly co-planar with the electrode to which the tap belongs to. The isolation layer can cover the whole tap. In this case, in order to exchange a current with the battery cell, the external element that is connected to the tap may have to cut through the isolation layer. Alternatively, the isolation layer can cover a certain area of a tap, such that a part of the tap can be used for an external connection and the other part, which is not used, is covered by an isolation layer. In particular, the isolation layer can be arranged on a part of a tap that is adjacent to the electrode stack. For example, the isolation layer can be arranged on a tap within a stripe adjacent to the electrode stack. In this case, the isolation layer is provided to mitigate a risk of a certain form of shortcut, e.g. a shortcut between a tap and an adjacent electrode.

An embodiment of the first aspect is related to a battery cell,
wherein the isolation layer of one or more taps contacts a respective separation layer arranged between one or more pairs of an anode and a cathode.

A respective separation layer (or separator) is the separator that is closest to the isolation layer of a tap. If a tap has isolation layers on a top side and on a bottom side, each isolation layer can contact different separator, i.e. a separator that is arranged between different electrode pairs. The isolation layer can be a part of the separator such that it covers, at least partly, the tap. Alternatively, the isolation layer can be attached to a tap such that it contacts an adjacent separator. In particular the isolation layer can contact the separator over the full extent to which the tap is arranged adjacent to the separator. This can provide an effective protection against a shortcut from a tap of a first electrode to a second electrode.

An embodiment of the first aspect is related to a battery cell,
wherein one or more of the taps comprises a deepening and the isolation layer is located in the deepening.

A deepening can be a mold, a cut-out, a pit, a depression, a slot, etc. configured to be filled with an isolation material forming an isolation layer. Advantageously, an isolation layer can be filled in a deepening such that an overall thickness or height of the tap with the isolation layer is not increased compared to a tap without an isolation layer. The deepening can be arranged where the isolation layer should be arranged, in particular at a part of the tap adjacent to the electrode stack and/or adjacent to the closest separator or at any other place, where a shortcut might occur.

An embodiment of the first aspect is related to a battery cell,
wherein the isolation layer is configured to mechanically support and/or protect the tap and/or the electrode of the tap on which it is placed.

The isolation layer can be arranged on and/or connected to a tap such that the tap is mechanically supported and/or protected. For example, the isolation layer can be made of a dampening material, such as rubber, configured to dissipate mechanical energy and/or to protect the tap from external mechanical or chemical influences. The isolation layer can support the tap by being arranged (e.g. glued) to the electrode stack. In this case the isolation layer can act as a kind of socket that mechanically supports/protects the external tap. Advantageously, thereby, the isolation layer not only protects the battery cell against an internal shortcut but also against breaking of a tap based, e.g., on external mechanical vibrations.

An embodiment of the first aspect is related to a battery cell,
wherein the isolation layer of a tap extends over an electrode that is not connected with the tap.

Such an arrangement can protect against the risk that two taps of electrodes contact each other due to lateral slip.

An embodiment of the first aspect is related to a battery cell,
wherein the isolation layer of a tap extends at least partly over the electrode of this tap.

The isolation layer of a tap can also extend over a plurality of electrodes of the electrode stack. The isolation layer can be arranged to contact the one or more other electrodes. This configuration can also provide a mechanical support of the tap as described for the preceding embodiment. For example, the isolation layer can consist of an isolating block (e.g. a block of synthetic material or rubber) that is arranged on a side of the tap that is co-planar to its electrode and that extends over one or more other electrodes of a prismatic electrode stack. Isolation layers in prismatic form can be standardized and handled efficiently during the manufacturing process. Such an arrangement can also protect against the risk that two taps of electrodes contact each other due to lateral slip.

An embodiment of the first aspect is related to a battery cell,
wherein the isolation layer is part of a separator that is arranged over and/or under the tap.

The isolation layer can be an extension of the separator that covers a tap on the upper side and or on the lower side. A separator that that extends between two taps can provide an isolation layer of a bottom side of a tap that is connected to an electrode above the separator. The same separator can provide an isolation layer of a top side of a tap that is connected to an electrode above the separator.

An embodiment of the first aspect is related to a battery cell,
wherein the isolation layer is placed at least partly on a side of a tap that is not co-planar to the electrode to which the tap belongs to.

The isolation layer can fully surround at least a part of a tap. In this case, all sides of a tap are at least partly covered by an isolation layer. In case the tap has no specific sides, the isolation layer covers a full circumference of the tap. This can provide protection against shortcuts and/or mechanical/chemical influences in all different directions.

An embodiment of the first aspect is related to a battery cell,
wherein the isolation layer is a lacquer in particular with a polyamide.

Providing the isolation layer as a lacquer can facilitate the manufacturing process of the battery cell. Furthermore, since a lacquer can be applied in a thin layer, the overall height of a tap can be essentially maintained after the isolation layer is arranged on the tap. Furthermore, lacquers can be efficiently poured in deepenings configured to provide a space for an isolation layer. Taps can, e.g., be uniformly coated with an isolation layer and afterwards arranged in the battery cell. The isolation layer can comprise a polyamide. This can in particular be the case if the isolation layer is a lacquer or any other thin layer.

A second aspect of this disclosure is related to a method for manufacturing an electrode with a tap,
comprising the steps:
- forming an electrode with a tap;
- forming an isolation layer on at least one side of the tap.

The isolation layer can be a layer-independent from the tap. E.g., the isolation layer can be a part of a separator that is arranged over (a part) of a tap during the manufacturing process of the battery cell. Additionally or alternatively, the isolation layer can be a separate layer arranged over the tap, such that an isolation of the tap is achieved, and mounted on the electrode stack. In this case, the isolation of the tap is achieved by assembling the different components of a battery cell together.

The isolation layer can also be a layer-dependent on the tap, e.g. by placing the isolation layer on the tap and using the tap structure as a basis. In this case, the isolation of the tap is achieved by forming the tap in a specific way.

If the isolation layer is provided by coating, e.g. a coating of (a part of) a tap, the coating can be applied by one or more of the following methods. The coating of a tap can be provided as a dip coating. Thereby an electrode is dipped into a bath of the coating material. The coating of a tap can be performed as a spray coating. Thereby, the coating material is sprayed onto the tap surface. The coating of a tap can be performed as a roll coating.

Thereby, the coating material is applied with a roller. The coating of a tap can be performed by electroplating. Thereby, the tap is immersed in a bath containing ions of the coating metal and an electric current is passed to deposit the coating metal onto the metal surface. Similar to this, the coating of the tap can be provided as a foil and/or lacquer. The coating of the tap can be performed by Chemical Vapor Deposition (CVD). Thereby, chemicals are vaporized and react to form a coating on the tap surface. The coating of the tap can be performed by Physical Vapor Deposition (PVD): Thereby, the coating material is vaporized and condensed onto the tap surface.

An embodiment of the first aspect is related to a battery cell,
wherein the forming of an electrode comprises the step:
- providing the isolation layer;
- drying the isolation layer.

The isolation layer can be applied to the tap (or to a material from which the tap is produced later) by using a nozzle, such as a squeegee nozzle. Additionally or alternatively, the isolation layer can be provided as a tape, in particular a sticky tape, that is applied to a tap (or to a material from which the tap is produced later). Furthermore, an applied isolation layer can be preprocessed. For example, if the isolation layer is applied in a wet state, then a pre-processing can be performed that comprises a drying of the wet isolation layer. Additionally or alternatively, a pre-processing can comprise a hardening of an applied isolation layer, e.g. a hardening by UV- and/or infrared light.

A third aspect of this disclosure is related to a device for manufacturing an electrode with a tap,
comprising:
- a support for an electrode with a tap;
- a dispenser for providing material, in particular a lacquer, for an isolation layer for the tap.

A dispenser for providing isolation material can come in various forms, depending on the type of isolation material and the application. A dispenser can be configured as a blowing machine. Such a dispenser can be used to dispense loose-fill insulation materials like fiberglass or cellulose onto a tap or into an electrode stack. A dispenser can be configured as an adhesive dispenser. They dispense adhesives, sealants, or other isolation materials in a controlled manner, usually with the help of a pneumatic or mechanical system. A dispenser can be configured as a tape dispenser. A tape dispenser can be used when the isolation material is provided as a tape. A dispenser can be configured as a material roll dispenser. For materials that come in rolls like plastic sheeting or vapor barrier, a roll dispenser may be used to unroll, cut, and apply the material efficiently. A dispenser can be configured as a paint or coating dispenser. For providing isolation through coatings or paints, specialized dispensers can mix and/or distribute paints or coatings to apply protective or isolative layers to a tap. A dispenser can be configured as a liquid dispenser. This can be used for dispensing liquid isolation materials such as oils or lacquers. These can come in many forms, from simple hand-pumped dispensers to sophisticated automated dispensing systems. The type of dispenser used can largely depend on the form, volume, and application of the isolation material.

An embodiment of the first aspect is related to a battery cell,
comprising a nozzle attached to the dispenser;
wherein the nozzle is configured to place material for the isolation layer on the tap of the electrode.

A nozzle for applying isolation material can be a component of equipment used to apply insulating or isolating materials to a surface or structure. A nozzle can be a spray nozzle, in particular a doctor blade nozzle. This can be used for applying liquid isolation materials, in particular polyurethane-based insulation materials. A nozzle can be an injection nozzle. An injection nozzle can be used to insert materials into pre-defined locations, e.g. into cavities of a tap and/or between taps. A nozzle can be an extrusion nozzles. An extrusion nozzle can be used for extruding thicker, more viscous isolation materials.

An embodiment of the first aspect is related to a battery cell,
comprising a dryer configured to dry the isolation layer, in particular with UV or infrared light, after being placed on the tap of the electrode.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a pouch cell with isolated taps according to an embodiment of this disclosure.
Fig. 2 illustrates a set-up for manufacturing a battery cell according to an embodiment of this disclosure.
Fig. 3 illustrates a flow chart for a manufacturing method according to an embodiment of this disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

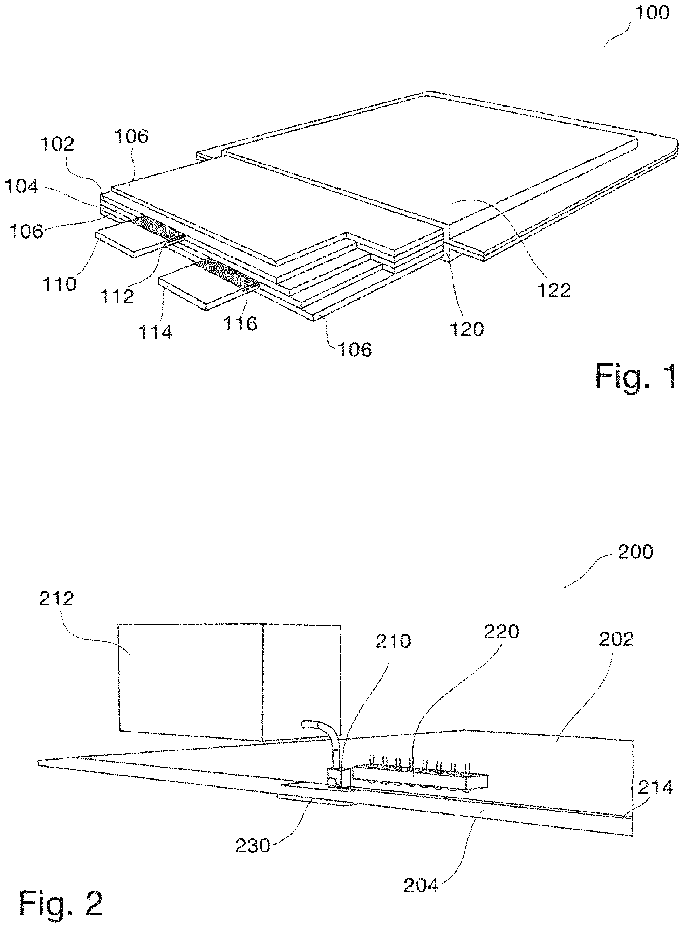

Fig. 1 illustrates a pouch cell 100 with isolated taps according to an embodiment of this disclosure. In a Li-ion cell, the separator serves as insulation between the anode and cathode. The separator is often only minimally larger (1mm circumferential) than the electrodes. If individual electrodes slip in the direction of the tab area, a short circuit (thermal runaway) can occur as soon as the anode comes into contact with the tab area of the cathode. The goal of the arrangement is an improved safety, in particular avoidance of shortcuts and associated thermal runaways within the battery electrode stack.

The pouch cell 100 comprises a 102 and a cathode 104 arranged in a housing 120, 122. Between the two electrodes 102, 104 a separator 106 is arranged as a thin layer. A separator 106 also covers the top and the bottom of the electrode stack. The anode 102 comprises a tap (current collector) 110. The cathode 104 comprises a tap (current collector) cathode tap 114, as well. Each tap 110, 114 is configured to access energy stored in the battery and/or to access the battery for maintenance purposes.

The anode tap 110 comprises an isolation layer 112. The isolation layer 112 is arranged within a mold of the tap and adjacent to the electrode stack. By this arrangement it protects the tap from getting in contact with another electrode and/or a tap of another electrode or with any other element that can possibly lead to a shortcut. Due to the arrangement of the electrode layer 112 in a mold of the tap, the overall size of the tap can remain the same.

The cathode tap 114 comprises an isolation layer 116 as well. The isolation layer 116 is arranged in the same way as the isolation layer 112 of the anode 110. The arrangement of the isolation layer can differ. For example, the isolation layer 116 of the cathode tap 114 can be arranged to cover the whole area on the top of the tap 114. Alternatively, the cathode tap 114 can comprise a second isolation layer on the end of the tap 114. In both cases, the tap 114 would be isolated in case the tap 110 is shifted over the tap 114 and bent down to touch the tap 114. Additionally or alternatively, a tap can also have an isolation layer on more than one side, e.g. an isolation layer similar to the isolation layer 112, 116 can be arranged on the bottom of the tap, protecting against shortcuts with an electrode arranged below the electrode of the respective tap.

The thickness of the isolation layer can vary. A thickness can be, e.g.,
<100µm, <120µm, <180µm, <200µm, <300µm, <500µm, or thicker.

Fig. 2 illustrates a set-up for manufacturing a battery cell according to an embodiment of this disclosure. In a continuous process, e.g. during coating / calendering / slitting or rewinding, an electrode material 202 is coated with a liquid lacquer (polyamide) as an isolation layer on the uncoated edge 204. The coating is performed by means of a doctor blade nozzle 210, but other nozzles may also be suitable.

The doctor blade nozzle 210 produces a coating 214 that that is similar to o a Kapton^{®} adhesive tape, i.e. the isolation layer is electrically insulating and mechanically protective. The varnish can be fed into the doctor nozzle 210 through a dispenser 212. The amount of lacquer discharged through the dispenser into the doctor nozzle can be applied in correlation to the tape speed and/or depending on a desired thickness of the isolation layer. Under the nozzle 210, a sliding shoe 230 ensures a defined distance between the nozzle and barefoil.

Drying of the liquid polyimide is caused by a drying unit 220. The drying can comprise UV- and/or infrared-light. The nozzle can be provided with a freewheel at the coating edge, the width of which can be adjusted so that the tracking of the polyamide up to the active material can be adjusted by the drying. After drying, there should still be a gap of a few µ.

The process can be monitored by an imaging system, in particular such that parameters as tape speed and/or amount of lacquer provided by the nozzle can be adjusted automatically, dependent on a desired thickness of the final isolation layer.

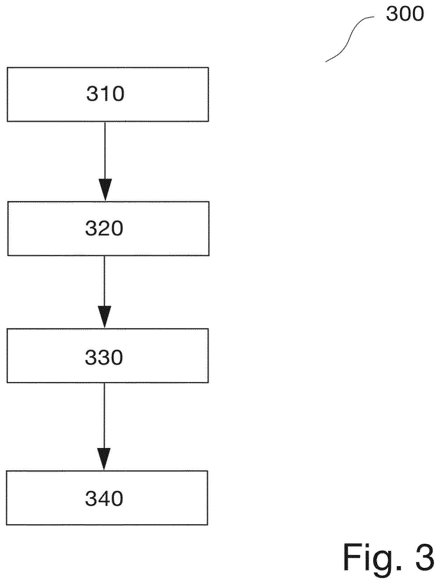

Fig. 3 illustrates a flow chart for a manufacturing method 300 according to an embodiment of this disclosure. In a first step 310, an electrode material is provided. The electrode material is provided such that a plurality of electrodes can be produced based on the electrode material.

In a second step 320, an isolation layer is formed on the electrode material. The isolation layer is formed on a pre-defined location on the electrode material, e.g. at the edge of an electrode material. The isolation layer can be formed by various processes, e.g., by providing a lacquer by a doctor blade nozzle. The isolation layer is provided such that after separating the electrode material into different electrodes, the isolation layer is on a desired place at the individual electrodes, in particular at the taps or current collectors of these individual electrodes.

In a further step 330, the applied lacquer is dried such that the final state the isolation layer is achieved. The drying can be performed before or after the separation of the electrode material into individual electrodes.

In a further step 340, the electrodes are assembled into an electrode stack. For assembling the electrode stack, further elements such as separators and electrodes of an opposite electrical type are used.

In an alternative, the isolation layer is not provided to the electrodes before the assembly of the electrode stack. In this alternative, the isolation layer is provided as a layer mounted to an electrode stack that covers the respective taps of one or more electrodes. In one embodiment, this can be done forming a separator arranged between to electrodes, such that the separator extends over at least one tap.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: pouch cell
- 102: anode
- 104: cathode
- 106: separator
- 110: anode tap or anode current collector
- 112: isolation layer
- 114: cathode tap or cathode current collect
- 116: isolation layer
- 120: housing
- 122: housing
- 202: electrode material
- 204: electrode edge
- 210: nozzle
- 212: dispenser
- 214: polyamide layer
- 220: drying means
- 230: glide support
- 300: manufacturing method
- 310: forming electrode
- 320: forming isolation layer
- 330: drying isolation layer
- 340: assembling battery stack

## Claims

1. Battery cell (100),
comprising:
- one or more anodes (102) and one or more cathodes (104) stacked upon each other yielding a stacked configuration;
wherein at least one of the anodes and/or the cathodes comprises a tap (110, 114) that exceeds the stacked configuration; and
wherein a tap comprises an isolation layer (112, 116).

2. The battery cell according to the preceding claim,
comprising more than one tap (110, 114) with an isolation layer (112, 116).

3. The battery cell according to one of the preceding claims,
wherein the isolation layer (112, 116) of one or more taps (110, 114) is arranged on a top side of the respective tap and/or on a bottom side of the respective tap.

4. The battery cell according to one of the preceding claims,
wherein the isolation layer (112, 116) of one or more taps (110, 114) contacts a respective separation layer (106) arranged between one or more pairs of an anode (102) and a cathode (104).

5. The battery cell according to one of the preceding claims,
wherein one or more of the taps (110, 114) comprises a deepening and the isolation layer (112, 116) is located in the deepening.

6. The battery cell according to one of the preceding claims,
wherein the isolation layer (112, 116) is configured to mechanically support and/or protect the tap and/or the electrode of the tap on which it is placed.

7. The battery cell according to one of the preceding claims,
wherein the isolation layer (112, 116) of a tap (110, 114) extends over an electrode that is not connected with the tap.

8. The battery cell according to one of the preceding claims,
wherein the isolation layer (112, 116) of a tap (110, 114) extends at least partly over the electrode (102, 104) of this tap.

9. The battery cell according to one of the preceding claims,
wherein the isolation layer (112, 116) is part of a separator (106) that is arranged over and/or under the tap (110, 114).

10. The battery cell according to one of the preceding claims,
wherein the isolation layer (112, 116) is placed at least partly on a side of a tap (110, 114) that is not co-planar to the electrode to which the tap belongs to.

11. The battery cell according to one of the preceding claims,
wherein the isolation layer (112, 116) is a lacquer in particular with a polyam ide.

12. Method for manufacturing an electrode with a tap, in particular for a battery cell according to one of the preceding claims,
comprising the steps:
- forming an electrode (202) with a tap;
- forming an isolation layer (214) on at least one side of the tap.

13. The method according to the preceding claim,
wherein the forming of an electrode comprises the step:
- providing the isolation layer;
- drying the isolation layer.

14. Device for manufacturing an electrode with a tap, in particular for a battery cell according to one of the preceding claims,
comprising:
- a support for an electrode with a tap (202);
- a dispenser (212) for providing material, in particular a lacquer, for an isolation layer (214) for the tap.

15. The device according to one of the preceding claims,
comprising a nozzle (210) attached to the dispenser (212);
wherein the nozzle is configured to place material (214) for the isolation layer on the tap of the electrode (202).

16. The device according to one of the preceding claims,
comprising a dryer (220) configured to dry the isolation layer, in particular with UV or infrared light, after being placed on the tap of the electrode (202).
